# EUROPEAN PATENT SPECIFICATION

(11) **EP 2 792 693 B1**
(45) Date of publication and mention of the grant of the patent: **10.05.2017**
(21) Application number: 12858348.1
(22) Date of filing: 16.11.2012
(51) Int. Cl.: C08F 220/24, C08F 220/28, C09K 3/18, D06M 15/27, D06M 15/277

(54) **FLUORINATED COPOLYMER, AND WATER-REPELLENT/OIL-REPELLENT AGENT COMPRISING SAME AS ACTIVE INGREDIENT**
FLUORIERTES COPOLYMER SOWIE WASSER-/ÖLABWEISENDES MITTEL MIT DIESEM COPOLYMER ALS WIRKSTOFF
COPOLYMÈRE FLUORÉ ET AGENT HYDROFUGE/OLÉOFUGE LE COMPRENANT COMME PRINCIPE ACTIF

(30) Priority: 12.12.2011 JP 2011271275
(43) Date of publication of application: 22.10.2014
(73) Proprietor: Unimatec Co., Ltd., Tokyo 105-0012 (JP)
(72) Inventor: KANEUMI Yoshiyama, Kitaibaraki-shi Ibaraki 319-1544 (JP)
(74) Representative: Beckmann, Claus
(86) International application number: PCT/JP2012/079785
(87) International publication number: WO 2013/088902

(56) References cited:
- WO-A1-2010/101091
- WO-A1-2010/140668
- WO-A1-2014/061463
- CN-A- 1 927 894
- JP-A- S5 055 689
- JP-A- 2009 102 463
- JP-A- 2009 191 272
- JP-A- 2010 521 541
- JP-A- 2011 515 503
- US-A1- 2011 178 260

## Description

### TECHNICAL FIELD

The present invention relates to a fluorine-containing copolymer and a water- and oil-repellent comprising the same as an active ingredient. More particularly, the present invention relates to a fluorine-containing copolymer that can be used as an active ingredient of a stain-proof-type water- and oil-repellent having excellent washing durability, and also relates to a water- and oil-repellent comprising the copolymer as an active ingredient.

### BACKGROUND ART

Conventionally, stain-proof finish and stain removal finish are applied to fiber fabrics by, for example, imparting hydrophilicity to the fiber fabrics, or treating the fiber fabrics with fluororesin. To impart hydrophilicity, for example, fibers are graft-polymerized with a hydrophilic monomer, or the fiber surface is coated with a hydrophilic polymer. These methods are mainly used for highly lipophilic fabrics, such as synthetic fiber fabrics and synthetic fiber/cotton blended fabrics. On the other hand, the treatment with fluororesin is generally performed by, for example, applying fluororesin alone or a mixture of fluororesin and a resin-processing agent for fibers as a solution to fabrics, followed by drying and curing.

Moreover, in order to improve their processability and washing durability, the following methods are employed:
- a method of treating a fabric with hydrophilic resin and performing plasma processing on the fabric before applying a fluorine-based resin solution to the fabric (Patent Document 1);
- a method of dipping a fiber product in a dispersion containing a fluorine-based resin solution, an inorganic salt, and a polyester polyoxyalkylene ether block polymer, followed by heat treatment while the fiber product is dipped in the dispersion (Patent Document 2); and
- a method of treating a fabric with fluororesin and a crosslinking agent comprising a blocked isocyanate compound, followed by irradiation with far-infrared rays (Patent Document 3).
The fluororesin used is a polyfluoroalkyl group-containing (meth)acrylic acid ester copolymer having a hydrophilic group, or the like.

However, stain-proof finish and stain removal finish cannot be applied to highly hydrophilic cotton fabrics or cotton blended fabrics by imparting hydrophilicity thereto. Conversely, in doing so fabrics with stain-proof finish and stain removal finish may become easily stained, or stains on the fabrics may become hard to remove. Moreover, when fabrics are treated with fluorine-based resin, the fabrics repel stains and are less likely to be stained; nevertheless, there is a problem that oil stains once made on the fabrics cannot be removed by washing. Even though these methods have effects on synthetic fiber fabrics, they do not work on cotton fabrics or cotton blended fabrics with a high cotton content. Even though stain removal properties are improved to some extent, washing durability is insufficient. Thus, satisfactory performance has not been accomplished yet. In addition, these processing methods have defects, such as complicated procedures, and lack of practicality because mass treatment cannot be performed in terms of devices and facilities.

Furthermore, due to the nature of fibers, i.e., repeated swelling and shrinkage depending on the moisture content during washing, etc., it is very difficult to apply long-lasting, stain-proof finish with resin, or the like, to fiber fabrics. Various studies are made on polymerizable monomers for improving durability; however, the actual situation is that stain-proof finish and stain removal finish with improved washing durability have not been placed on the market.

### PRIOR ART DOCUMENT

### PATENT DOCUMENT

Patent Document 1 : JP-B-7-30513
Patent Document 2 : JP-B-2-19233
Patent Document 3 : JP-A-5-59669
Patent Document 4 : WO 2009/034773 A1
Patent Document 5 : WO 2010/101091 A1
Patent Document 6 : WO 2005/118737 A1

### OUTLINE OF THE INVENTION

### PROBLEM TO BE SOLVED BY THE INVENTION

An object of the present invention is to provide a fluorine-containing copolymer used as an active ingredient of a stain-proof-type, water- and oil-repellent that can apply effective stain-proof finish and stain removal finish to fiber fabrics, particularly cotton fabrics and cotton blended fabrics, and that has excellent washing durability; and also to provide a water- and oil-repellent comprising this fluorine-containing copolymer as an active ingredient.

### MEANS FOR SOLVING THE PROBLEM

The above object of the present invention can be achieved by a fluorine-containing copolymer that is a copolymer of a polyfluoroalkyl alcohol (meth)acrylic acid derivative represented by the general formula:

CₙF2ₙ₊₁(CH₂CF₂)ₐ(CF₂CF₂)_{b}(CH₂CH₂)_{c}OCOCR=CH₂ [I]

wherein R is a hydrogen atom or a methyl group, n is an integer of 1 to 6, a is an integer of 1 to 4, b is an integer of 1 to 3, and c is an integer of 1 to 3; and a (meth)acrylic acid polyoxyalkylene ester represented by the general formula:

R¹(OR²)ₚ(OR³)_{q}OCOCR=CH₂ [II]

wherein R is a hydrogen atom or a methyl group, R¹ is a hydrogen atom, a linear or branched alkyl group having 1 to 30 carbon atoms, or an aromatic group, R² and R³ are different each other and each is a linear or branched alkylene group having 1 to 6 carbon atoms, p is an integer of 1 to 100, and q is an integer of 0 or 1 to 50, provided that when p is 1 and q is 0, R¹ is an aforementioned alkyl group or an aromatic group; wherein the polyfluoroalkyl alcohol (meth)acrylic acid derivative of formula [I] and the (meth)acrylic acid polyoxyalkylene ester of formula [II] are copolymerized at a weight ratio of [I] : [II] which is 20 to 70 : 80 to 30 (provided that the total of both is 100); and by a water- and oil-repellent comprising this fluorine-containing copolymer as an active ingredient. The term "(meth)acrylic acid" as used herein refers to acrylic acid or methacrylic acid.

### EFFECT OF THE INVENTION

The present invention provides a novel fluorine-containing copolymer that is a copolymer of a polyfluoroalkyl alcohol (meth)acrylic acid derivative represented by the general formula [I] and a (meth)acrylic acid polyoxyalkylene ester represented by the general formula [II].

When a water- and oil-repellent comprising this novel fluorine-containing copolymer as an active ingredient is applied to fiber fabrics, particularly cotton fabrics or cotton blended fabrics, it can apply effective stain-proof finish and stain removal finish to the fiber fabrics. In addition, the stain-proof-type, water- and oil-repellent has excellent washing durability.

### EMBODIMENTS FOR CARRYING OUT THE INVENTION

The polyfluoroalkyl alcohol (meth)acrylic acid derivative represented by the general formula:

CₙF2ₙ₊₁(CH₂CF₂)ₐ(CF₂CF₂)_{b}(CH₂CH₂)_{c}OCOCR=CH₂ [I]

R: a hydrogen atom or a methyl group
n: an integer of 1 to 6
a: an integer of 1 to 4
b: an integer of 1 to 3
c: an integer of 1 to 3
is a known compound, as described in Patent Documents 4 and 5. Examples thereof include the following compounds and their corresponding methacrylic acid derivatives. C₂F₅(CH₂CF₂)(CF₂CF₂)(CH₂CH₂)OCOCH=CH₂ C₄F₉(CH₂CF₂)(CF₂CF₂)(CH₂CH₂)OCOCH=CH₂ C₂F₅(CH₂CF₂)(CF₂CF₂)(CH₂CH₂)₂OCOCH=CH₂ C₄F₉(CH₂CF₂)(CF₂CF₂)(CH₂CH₂)₂OCOCH=CH₂ C₂F₅(CH₂CF₂)(CF₂CF₂)₂(CH₂CH₂)OCOCH=CH₂ C₄F₉(CH₂CF₂)(CF₂CF₂)₂(CH₂CH₂)OCOCH=CH₂ C₂F₅(CH₂CF₂)(CF₂CF₂)₂(CH₂CH₂)₂OCOCH=CH₂ C₄F₉(CH₂CF₂)(CF₂CF₂)₂(CH₂CH₂)₂OCOCH=CH₂ C₂F₅(CH₂CF₂)(CF₂CF₂)₃(CH₂CH₂)OCOCH=CH₂ C₄F₉(CH₂CF₂)(CF₂CF₂)₃(CH₂CH₂)OCOCH=CH₂ C₂F₅(CH₂CF₂)(CF₂CF₂)₃(CH₂CH₂)₂OCOCH=CH₂ C₄F₉(CH₂CF₂)(CF₂CF₂)₃(CH₂CH₂)₂OCOCH=CH₂ C₂F₅(CH₂CF₂)₂(CF₂CF₂)(CH₂CH₂)OCOCH=CH₂ C₄F₉(CH₂CF₂)₂(CF₂CF₂)(CH₂CH₂)OCOCH=CH₂ C₂F₅(CH₂CF₂)₂(CF₂CF₂)(CH₂CH₂)₂OCOCH=CH₂ C₄F₉(CH₂CF₂)₂(CF₂CF₂)(CH₂CH₂)₂OCOCH=CH₂ C₂F₅(CH₂CF₂)₂(CF₂CF₂)₂(CH₂CH₂)OCOCH=CH₂ C₄F₉(CH₂CF₂)₂(CF₂CF₂)₂(CH₂CH₂)OCOCH=CH₂ C₂F₅(CH₂CF₂)₂(CF₂CF₂)₂(CH₂CH₂)₂OCOCH=CH₂ C₄F₉(CH₂CF₂)₂(CF₂CF₂)₂(CH₂CH₂)₂OCOCH=CH₂ C₂F₅(CH₂CF₂)₂(CF₂CF₂)₃(CH₂CH₂)OCOCH=CH₂ C₄F₉(CH₂CF₂)₂(CF₂CF₂)₃(CH₂CH₂)OCOCH=CH₂ C₂F₅(CH₂CF₂)₂(CF₂CF₂)₃(CH₂CH₂)₂OCOCH=CH₂ C₄F₉(CH₂CF₂)₂(CF₂CF₂)₃(CH₂CH₂)₂OCOCH=CH₂

The (meth)acrylic acid polyoxyalkylene ester to be copolymerized with this polyfluoroalkyl alcohol (meth)acrylic acid derivative and represented by the general formula:

R¹(OR²)ₚ(OR³)_{q}OCOCR=CH₂ [II]

R: a hydrogen atom or a methyl group
R¹: a hydrogen atom, a linear or branched alkyl group having 1 to 30 carbon atoms, or an aromatic group
R² and R³: different each other and a linear or branched alkylene group having 1 to 6 carbon atoms
p: an integer of 1 to 100
q: an integer of 0 or 1 to 50
is a polyalkylene glycol mono(meth)acrylate having a terminal hydroxyl group, alkyl group, or aromatic group. Examples of terminal alkyl groups include linear or branched alkyl groups having 1 to 30 carbon atoms, such as methyl, ethyl, propyl, isopropyl, n-butyl, isobutyl, hexyl, 2-ethylhexyl, lauryl, palmityl, and stearyl. Examples of terminal aromatic groups include a phenyl group or a phenyl group substituted with an alkyl group having 1 to 30 carbon atoms.

R² and R³ are different each other and each is a linear or branched alkylene group having 1 to 6 carbon atoms, such as -CH₂CH₂-, -CH₂CH₂CH₂-, -CH₂CH(CH₃)-, -CH₂CH₂CH₂CH₂-, -CH₂CH₂CH₂CH₂CH₂CH₂-, Preferably, R² is an ethylene group, and R³ is a propylene group or a butylene group. However, when p is 1 and q is 0, R¹ is an aforementioned alkyl group or an aromatic group. In this embodiment, when R¹ is a hydrogen atom, this forms 2-hydroxyethyl (meth)acrylate HOCH₂CH₂OCOCR=CH₂, which is a crosslinkable group-containing monomer; thus, R¹ is limited to an alkyl group or an aromatic group. On the other hand, q is an integer of 0 or 1 to 50. When q is 0 and R² is an ethylene group, a (poly)ethylene glycol mono(meth)acrylate derivative is formed.

Practically, commercial products, such as Blemmer (registered trademark; produced by NOF Corporation) represented by the formula:

R¹(OC₄H₈)_{q'}(OC₃H₆)_{q}(OC₂H₄)ₚOCOCR=CH₂

can be directly used singly or in combination.

| Blemmer | Chemical name |
|---|---|
| PME-100 | Methoxy polyethylene glycol (p: about 2) monomethacrylate |
| PME-200 | Methoxy polyethylene glycol (p: about 4) monomethacrylate |
| PME-400 | Methoxy polyethylene glycol (p: about 9) monomethacrylate |
| PME-550 | Methoxy polyethylene glycol (p: about 12) monomethacrylate |
| PME-1000 | Methoxy polyethylene glycol (p: about 23) monomethacrylate |
| PME-4000 | Methoxy polyethylene glycol (p: about 90) monomethacrylate |
| 50POEP-800B | 2-ethylhexyloxy polyethylene glycol (p: about 80) polypropylene glycol (q: about 6) monomethacrylate |
| PLE-200 | Lauroxy polyethylene glycol (p: about 4) monomethacrylate |
| PSE-400 | Stearoxy polyethylene glycol (p: about 9) monomethacrylate |
| PSE-1300 | Stearoxy polyethylene glycol (p: about 30) monomethacrylate |
| PAE-50 | Phenoxy ethylene glycol (p:1) monomethacrylate |
| PAE-100 | Phenoxy polyethylene glycol (p:2) monomethacrylate |
| 43PAPE-600B | Phenoxy polyethylene glycol (p: about 6) polypropylene glycol (q: about 6) monomethacrylate |
| AME-400 | Methoxy polyethylene glycol (p: about 9) monoacrylate |
| ALE series | Lauroxy polyethylene glycol monoacrylate |
| ANE-1300 | Nonylphenoxy polyethylene glycol (p: about 30) monoacrylate |
| ANP-300 | Nonylphenoxy polypropylene glycol (p: about 5) monoacrylate |
| 75ANEP-600 | Nonylphenoxy polyethylene glycol polypropylene glycol monoacrylate |
| AAE-50 | Phenoxy ethylene glycol (p:1) monoacrylate |
| AAE-300 | Phenoxy polyethylene glycol (p: about 5.5) monoacrylate |
| PE-90 | Polyethylene glycol (p: about 2) monomethacrylate |
| PE-200 | Polyethylene glycol (p: about 4.5) monomethacrylate |
| PE-350 | Polyethylene glycol (p: about 8) monomethacrylate |
| PE-350G | 60% water-diluted product of PE-350 (special additive blend) |
| PP-1000 | Polypropylene glycol (q: about 4 to 6) monomethacrylate |
| PP-500 | Polypropylene glycol (q: about 9) monomethacrylate |
| PP-800 | Polypropylene glycol (q: about 13) monomethacrylate |
| 50PEP-300 | Polyethylene glycol (p: about 3.5) polypropylene glycol (q: about 2.5) monomethacrylate |
| 70PEP-350B | Polyethylene glycol (p: about 5) polypropylene glycol (q: about 2) monomethacrylate |
| PET series | Polyethylene glycol polybutylene glycol monomethacrylate |
| PPT series | Polypropylene glycol polybutylene glycol monomethacrylate |
| 10PPB-500B | Propylene glycol polybutylene glycol (q': about 6) monomethacrylate |
| AE-90 | Polyethylene glycol (p: about 2) monoacrylate |
| AE-200 | Polyethylene glycol (p: about 4.5) monoacrylate |
| AE-400 | Polyethylene glycol (p: about 10) monoacrylate |
| AP-150 | Polypropylene glycol (q: about 3) monoacrylate |
| AP-400 | Polypropylene glycol (q: about 6) monoacrylate |
| AP-550 | Polypropylene glycol (q: about 9) monoacrylate |

The copolymerization ratio of the polyfluoroalkyl alcohol (meth)acrylic acid derivative [I] and the (meth)acrylic acid polyoxyalkylene ester [II] is determined by the relationship between the water- and oil-repellency and solubility in a solvent of the fluorine-containing copolymer. When the copolymerization ratio of the polyoxyalkylene ester [II] is less than this range, the copolymer is poorly soluble in the reaction solvent and the diluent solvent, and stain removal effect is not sufficient. In contrast, when the copolymerization ratio of the polyoxyalkylene ester [II] is greater than this range, the water- and oil-repellency is impaired. The obtained copolymer has a weight average molecular weight (Mw; polystyrene conversion) of 1,000 to 1,000,000, preferably 2,000 to 500,000.

The copolymer can be further copolymerized with a fluorine atom-free polymerizable monomer and/or another fluorine-containing polymerizable monomer. When another fluorine-containing polymerizable monomer is used, the number of carbon atoms of the polyfluoroalkyl group, preferably perfluoroalkyl group, of the monomer must be 1 to 6, preferably 2 to 4.

As the fluorine atom-free polymerizable monomer to be copolymerized with the polyfluoroalkyl alcohol (meth)acrylic acid derivative [I] and the (meth)acrylic acid polyoxyalkylene ester [II], at least one of (meth)acrylic acid esters represented by the following general formulae [III], [IV], and [V] is preferably used.

CH₂=CR¹COOR³ [III]

CH₂=CR¹COOR⁶Y [IV]

CH₂=CR¹COO(R⁷O)₁R⁸ [V]

R¹: H or a methyl group
R³: a C₁-C₃₀ linear, branched, or alicyclic alkyl group or an aralkyl group
R⁶: a C₁-C₃₀ linear or branched alkylene group
R⁷: a C₁-C₆ linear or branched alkylene group
R⁸: a C₁-C₃₀ linear or branched alkyl group or an aromatic group
Y: a crosslinkable functional group
1: an integer of 1 to 50

Moreover, examples of the fluorine atom-free polymerizable monomer, including the above compounds [III], [IV], and [V], are acrylic acid esters or methacrylic acid esters etherified with alkyl groups, such as methyl, ethyl, propyl, isopropyl, n-butyl, n-hexyl, 2-ethylhexyl, n-octyl, lauryl, and stearyl; cycloalkyl groups, such as cyclohexyl; aralkyl groups, such as benzyl; alkoxyalkyl groups, such as methoxymethyl, 2-methoxyethyl, 2-ethoxyethyl, 2-butoxyethyl, and 3-ethoxypropyl; fumaric acid or maleic acid ester esterified with monoalkyl esters or dialkyl esters, such as monomethyl, dimethyl, monoethyl, diethyl, monopropyl, dipropyl, monobutyl, dibutyl, mono-2-ethylhexyl, di-2-ethylhexyl, monooctyl, and dioctyl; and vinyl esters, such as vinyl acetate and vinyl caprylate. Preferably, alkyl (meth)acrylate containing a long chain alkyl group having 8 or more carbon atoms are used. Specific examples thereof include acrylic acid esters etherified with alkyl groups, such as 2-ethylhexyl, n-octyl, lauryl, and stearyl; cycloalkyl groups, such as cyclohexyl; and aralkyl groups, such as benzyl. More preferably, a combination of an acrylic acid ester etherified with an alkyl group, such as 2-ethylhexyl or stearyl, and a (meth)acrylic acid ester etherified with an aralkyl group, such as benzyl, is used in terms of the balance between water-repellency and oil-repellency.

Usable fluorine-containing polymerizable monomers are represented by the general formula:

CH₂=CRCOOR⁹(NR¹⁰SO₂)ₘRf [VI]

R: a hydrogen atom or a methyl group
R⁹: a linear or branched alkylene group having 1 to 6 carbon atoms, polyfluoroalkylene group
R¹⁰: a lower alkyl group having 1 to 4 carbon atoms
Rf: a polyfluoroalkyl group, preferably a perfluoroalkyl group, having 1 to 6 carbon atoms, preferably 2 to 4 carbon atoms
m: 0 or 1.
For example, polyfluoroalkyl group-containing (meth)acrylate monomers shown in paragraph [0018] of Patent Document 4 can be used. However, the number of carbon atoms n of the terminal polyfluoroalkyl group must be 1 to 6. When R⁹ is a polyfluoroalkylene group, the total number of carbon atoms of the polyfluoroalkylene group and the terminal polyfluoroalkyl group must be 2 to 6.

Further, if necessary, a polyfunctional monomer or oligomer can be copolymerized in a ratio of 10 wt.% or less in the copolymer. Examples of the polyfunctional monomer or oligomer include ethyleneglycol di(meth)acrylate, propyleneglycol di(meth)acrylate, 1,4-butanediol di(meth)acrylate, 1,6-hexanediol di(meth)acrylate, 1,9-nonanediol di(meth)acrylate, neopentylglycol di(meth)acrylate, tetraethyleneglycol di(meth)acrylate, tripropyleneglycol di(meth)acrylate, polypropyleneglycol di(meth)acrylate, Bisphenol A•ethylene oxide adduct diacrylate, dimethylol tricyclodecane diacrylate, glycerin methacrylate acrylate, 3-acryloyloxyglycerin monomethacrylate.

In terms of cost, a copolymer with a fluorine atom-free polymerizable comonomer is advantageous. It is preferable, in terms of both water- and oil-repellency and cost, to copolymerize a fluorine atom-free polymerizable monomer in 30 wt.% or less, preferably 1 to 30 wt.%, more preferably 1 to 10 wt.%, in the copolymer.

Furthermore, a crosslinkable group-containing monomer, such as 2-hydroxyethyl (meth)acrylate, 3-hydroxypropyl (meth)acrylate, (meth)acrylamide, N-methylol (meth)acrylamide, N-methoxymethyl acrylamide, N-butoxymethyl acrylamide, or glycidyl (meth)acrylate, can be added and copolymerized in a ratio of 10 wt.% or less, preferably 0.5 to 10 wt.%, in the copolymer. When such a crosslinkable group-containing monomer is further copolymerized, crosslinking with the hydroxyl group on the fiber surface or self-crosslinking occurs to thereby enhance the durability of the water- and oil- repellent.

Although the copolymerization reaction may be performed by emulsion polymerization or suspension polymerization, the reaction is preferably performed by solution polymerization. Usable reaction solvents for solution polymerization are alcohol-based solvents, ester-based solvents, ketone-based solvents, glycol-based solvents. These solvents can be used singly or in combination of two or more.

Examples of alcohol solvents include linear or branched alkanols having 1 to 8 carbon atoms. Usable alkanols are not only 1-alkanol, but also 2-ethanol. Examples of ester solvents include methyl, ethyl, propyl, and butyl ester of acetic acid; methyl propionate; methyl, ethyl, and pentyl ester of lactic acid. Examples of ketone solvents include acetone, methyl ethyl ketone, methyl isobutyl ketone, 2-pentanone, 3-pentanone, 2-hexanone. Examples of glycol solvents include ethylene glycol, propylene glycol, dipropylene glycol, or monomethyl ethers thereof, tripropylene glycol.

Examples of polymerization initiators include oil-soluble or water-soluble peroxides or azobis compounds, such as benzoyl peroxide, lauroyl peroxide, tert-butyl peroxide, cumene hydroperoxide, tert-butyl peroxypivalate, diisopropyl peroxydicarbonate, tert-butyl perbenzoate, 1-hydroxycyclohexyl hydroperoxide, 3-carbonyl propionyl peroxide, acetyl peroxide, azobis(isobutylamidine) • dihydrochloride, azobis(isobutyronitrile), azobis(2,4-dimethylvaleronitrile), sodium peroxide, potassium peroxide, and ammonium peroxide. Such a polymerization initiator is used at 0.01 to 5 wt.%, preferably 0.1 to 5 wt.%, based on the total amount of the comonomers. The polymerization initiator is added to the reaction system as a polymerization initiator solution, wherein part of the reaction solvent in used.

Further, in order to adjust the molecular weight, a chain transfer agent can be used, if necessary. Examples of chain transfer agents include alkyl mercaptans, such as n-octyl mercaptan, n-dodecyl mercaptan, and t-dodecyl mercaptan; dimethyl ether, methyl tert-butyl ether, C₁-C₆ alkanes, methanol, ethanol, 2-propanol, cyclohexane, carbon tetrachloride, chloroform, dichloromethane, methane, ethyl acetate, ethyl malonate and acetone.

The copolymerization reaction is performed using such a reaction solvent, reaction initiator, at a reaction temperature of at 0 to 100°C, preferably about 5 to 70°C, particularly preferably 40 to 65°C. After completion of the reaction, a copolymer solution having a solid matters content of 5 to 30 wt.% is obtained. The solvent is removed from this reaction mixture, thereby obtaining a fluorine-containing copolymer. Generally, the copolymer solution is further diluted with water or an organic solvent to a solid matters content of 0.05 to 10 wt.%, preferably 0.1 to 5 wt.%, as required. This diluted solution can be used to prepare a water- and oil-repellent. Examples of organic solvents usable herein include alcohol solvents, ester solvents, ketone solvents, and glycol organic solvents, as mentioned above. The organic solvent used herein may be different from the polymerization reaction solvent.

To the resulting diluted copolymer solution, a blocked isocyanate is added as an cross-linking agent in a weight ratio of 0.05 to 3.0, preferably 0.2 to 2.0, to the weight of solid matters content of the copolymer solution. The blocked isocyanate can impart excellent water-repellency and high washing resistance to also natural fibers such as cotton. When the amount of the blocked isocyanate is lower than the above-mentioned ratio, the washing resistance is decreased. On the other hand, when the blocked isocyanate is used in an amount higher than the ratio, the textile feeling of a fabric is deteriorated. (see Patent Document 6)

The blocked isocyanate herein is a compound having one or more blocked isocyanate group and not having a polymerizable carbon-carbon unsaturated bond, i.e., a compound having a structure in which the isocyanate group is blocked with a blocking agent. As such a blocked isocyanate, a preferred structure is obtained by reacting a polyisocyanate and a compound having two or more active hydrogen atoms in a molecule thereof and blocking the isocyanate group of the resulting compound with a blocking agent.

Examples of the polyisocyanate include aromatic isocyanates such as 4,4'-diphenylmethane diisocyanate, 2,4'-diphenylmethane diisocyanate, and tolylene diisocyanate; aliphatic isocyanates such as trimethylene diisocyanate, tetramethylene diisocyanate, pentamethylene diisocyanate, hexamethylene diisocyanate, 1,2-propane diisocyanate, 1,2-butane diisocyanate, trimethylhexamethylene diisocyanate, isophorone diisocyanate, 4,4'-dicyclohexylmethane diisocyanate, and cyclohexylene diisocyanate; and their isocyanurate modified compounds, prepolymer modified compounds, biuret modified compounds, and allophanate modified compounds.

The compound having two or more active hydrogen atoms in the molecule is preferably a polyvalent alcohol or a polyvalent amine. Examples of the polyvalent alcohol include ethylene glycol, propylene glycol, butanediols, pentanediols, hexanediols, glycerin, trimethylolpropane, pentaerythritol, sorbitol, neopentyl glycol, bisphenol A, xylylene glycol, and at least one of modified compounds of these alcohols. Examples of the polyvalent amine include hexamethylenediamine and 3,3'-iminobispropylamine. The polyvalent alcohol herein may be a polyester polyol, and as the polyester polyol, those having an ester bond obtained by a reaction of a polyvalent alcohol and a polyvalent carboxylic acid such as phthalic acid, adipic acid, fumaric acid, pyromellitic acid, trimellitic acid, aliphatic dicarboxylic acid, or a derivative thereof are used.

As the blocking agent for the isocyanate, alkyl ketone oximes, phenols, alcohols, β-diketones, and lactams are used, and preferably, methyl ethyl ketone oxime, ε-caprolactam, phenol, cresol, acetylacetone, diethyl malonate, isopropyl alcohol, tert-butyl alcohol, and maleic acid imide, more preferably compounds having a dissociation temperature of from 120 to 180°C represented by dialkyl ketone oximes such as methyl ethyl ketone oxime and lactams such as ε-caprolactam are used.

The blocked isocyanate is obtained by, as described above, reacting a polyvalent alcohol to an isocyanate compound and then reacting the resulting compound to a blocking agent. These reactions are preferably performed in a non-aqueous solvent such as ketones, ethers, or hydrocarbons. In addition, it is preferable that the equivalent weights of the isocyanate compound, the compound having two or more active hydrogen atoms, and the blocking agent become equal to one another at the time of completion of all the reactions.

After the above-described blocking reaction, the blocked isocyanate is preferably emulsified with water and a nonionic emulsifier, a nonionic/cationic emulsifier, or a nonionic/anionic emulsifier, in particular, a nonionic/cationic emulsifier. The solvent is removed after the emulsification, according to need.

As the blocked isocyanate, commercially available products, for example, RucoGuard XTS, a Rudolf product; RucoGuard WEB, a Rudolf product; NK Assist-NY, a Nikka Chemical product; NK Assist-V, a Nikka Chemical product; NK Assist-FU, a Nikka Chemical product; Prominate XC-830, a Gantsu Chemical product; Prominate XC-915, a Gantsu Chemical product; Prominate XC-950, a Gantsu Chemical product; and Elastron BN-69, a Daiichi Kogyo Seiyaku product can be used as such.

The copolymer solution can further contain other additives indispensable for the water- and oil-repellent use, for example, a cross-linking agent other than the blocked isocyanate, such as a melamine resin or a urea resin, a polymer extender, another water-repellent such as a silicone resin or oil, or wax, an insecticide, an antistatic agent, a dye stabilizer, an anticreasing agent, and a stain blocker.

The thus obtained copolymer solution containing the blocked isocyanate is effectively applied, as a water- and oil-repellent, to, for example, fibers, a fabric, a woven fabric, paper, a film, a carpet, or a fabric product made of filaments, threads, or fibers. The application is performed by coating, dipping, spraying, padding, roll coating, or a combination thereof. For example, a bath containing a solid matters content in a concentration of 0.1 to 10% by weight is used as a pad bath. A material to be treated is padded in this pad bath and is then subjected to removal of excessive liquid with a squeezing roller, followed by drying, thereby allowing the fluorine-containing copolymer to adhere to the material to be treated in a ratio of 0.01 to 10% by weight to the amount of the material. Subsequently, drying, which varies depending on the type of the material to be treated, is usually conducted at 100 to 120°C for from 1 minute to 2 hours to complete the water- and oil-repellent treatment.

### [Examples]

The present invention will be described with reference to examples below.

### Synthesis Example 1

(1) In a 1200-mL autoclave equipped with a stirrer and a thermometer, 603 g (1.17 mol) of

   CF₃(CF₂)₃(CH₂CF₂)(CF₂CF₂)I (99.8GC%)

   and 7 g of di-tertiary butyl peroxide were charged, and the autoclave was deaerated with a vacuum pump. When the inner temperature was increased to 80°C, ethylene was sequentially introduced into the autoclave to adjust the inner pressure to 0.5 MPa. When the inner pressure was decreased to 0.2 MPa, ethylene was introduced again to increase the inner pressure to 0.5 MPa. This process was repeated to introduce 49 g (1.7 mol) of ethylene over about 3 hours, while maintaining the inner temperature at 80 to 115°C. The content was collected at an inner temperature of 50°C or lower to obtain 635 g (yield: 98.8%) of

   CF₃(CF₂)₃(CH₂CF₂)(CF₂CF₂)(CH₂CH₂)I (98.3GC%).
(2) In a 200-mL three-neck flask equipped with a condenser and a thermometer, 100 g (0.18 mol) of

   CF₃(CF₂)₃(CH₂CF₂)(CF₂CF₂)(CH₂CH₂)I (98.3GC%)

   prepared in the above (1) and 100 g (1.68 mol) of N-methyl formamide were charged, followed by stirring at 150°C for 4 hours. After the completion of the reaction, the reaction mixture was washed with 30 mL of water. The lower layer (82.8 g) was mixed with 83 g of a 15 wt% p-toluenesulfonic acid aqueous solution, followed by stirring at 80°C for 8 hours. The reaction mixture was left standing, and then 60 g of a reaction product (78.4GC%), being a transparent, colorless liquid at room temperature, was obtained as the lower layer (yield: 62.6%).
   The reaction product was subjected to reduced pressure distillation under conditions of an inner pressure of 0.2 kPa, an inner temperature of 100 to 144°C, and a column top temperature of 58 to 59°C to obtain 43.7 g (distillation yield: 88.2%) of a purified reaction product (95.4GC%).
   The resulting purified reaction product was confirmed by the results of ¹H-NMR and ¹⁹F-NMR to be the compound represented by the following formula:

   CF₃(CF₂)₃(CH₂CF₂)(CF₂CF₂)(CH₂CH₂)OH
(3) 40.0g (0.09 mol) of the reaction product (95.4GC%) prepared in the above (2), 21 g of toluene, 1.7 g of p-toluenesulfonic acid, and 0.05 g of hydroquinone were charged in a 100-mL three-neck flask equipped with a condenser and a thermometer. After the inner temperature was increased to 100°C, 10.2 g (0.14 mol) of acrylic acid was added in the flask, followed by stirring at an inner temperature of 115°C for 2 hours. After the completion of the reaction, 72 g of the reaction solution was collected after being cooled. Toluene was removed with an evaporator, and 44.5 g of the residue was washed with tap water to obtain 40.9 g (yield: 82.6%) of a reaction product (86.3GC%), being a transparent, colorless liquid at room temperature, was obtained as the lower layer.

The reaction product was subjected to reduced pressure distillation under conditions of an inner pressure of 0.2 kPa, an inner temperature of 103 to 143°C, and a column top temperature of 60 to 61°C to obtain 15.7 g (distillation yield: 44.1%) of a purified reaction product (99.2GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)(CH₂CH₂)OCOCH=CH₂

### [Fluorine-containing monomer A]

### Synthesis Example 2

(1) A reaction for introducing 34 g (1.2 mol) of ethylene was performed, as in Synthesis Example 1 (1), using 529 g (0.86 mol) of

   CF₃(CF₂)₃(CH₂CF₂)(CF₂CF₂)₂I (99.9GC%)

   and 5 g of the di-tertiary butyl peroxide to obtain 550 g (yield: 99.4%) of

   CF₃(CF₂)₃(CH₂CF₂)(CF₂CF₂)₂(CH₂CH₂)I (99.1GC%).
(2) In a 200-mL three-neck flask equipped with a condenser and a thermometer, 150 g (0.24 mol) of

   CF₃(CF₂)₃(CH₂CF₂)(CF₂CF₂)₂(CH₂CH₂)I (99.1GC%)

   prepared in the above (1) and 105 g (1.78 mol) of N-methyl formamide were charged, followed by stirring at 150°C for 5 hours. After the completion of the reaction, the reaction mixture was washed with 40 mL of water. The lower layer (132.3 g) was mixed with 135 g of a 15 wt% p-toluenesulfonic acid aqueous solution, followed by stirring at 80°C for 7 hours. The reaction mixture was left standing, and then 103 g (yield: 53.5%) of a reaction product (65.5GC%), being a white solid, was obtained as the lower layer.
   The reaction product was subjected to reduced pressure distillation under conditions of an inner pressure of 0.2 kPa, an inner temperature of 121 to 163°C, and a column top temperature of 76 to 77°C to obtain 66.9 g (distillation yield: 94.2%) of a purified reaction product (95.3GC%).
   The resulting purified reaction product was confirmed by the results of ¹H-NMR and ¹⁹F-NMR to be the compound represented by the following formula:

   CF₃(CF₂)₃(CH₂CF₂)(CF₂CF₂)₂(CH₂CH₂)OH
(3) 60.0g (0.11 mol) of the reaction product (95.4GC%) prepared in the above (2), 29 g of toluene, 1.6 g of p-toluenesulfonic acid, and 0.07 g of hydroquinone were charged in a 100-mL three-neck flask equipped with a condenser and a thermometer. After the inner temperature was increased to 100°C, 10 g (0.14 mol) of acrylic acid was added in the flask, followed by stirring at an inner temperature of 118°C for 3 hours. After the completion of the reaction, 82 g of the reaction solution was collected after being cooled. Toluene was removed with an evaporator, and 63.9 g of the residue was washed with tap water to obtain 60.8 g (yield: 86.4%) of a reaction product (89.3GC%), being a transparent, colorless liquid at room temperature, was obtained as the lower layer.

The reaction product was subjected to reduced pressure distillation under conditions of an inner pressure of 0.2 kPa, an inner temperature of 125 to 155°C, and a column top temperature of 84 to 86°C to obtain 42.2 g (distillation yield: 77.2%) of a purified reaction product (99.4GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)₂(CH₂CH₂)OCOCH=CH₂

### [Fluorine-containing monomer B]

### Synthesis Example 3

60.0g (0.11 mol) of the reaction product (95.4GC%) prepared in Synthesis Example 2 (2), 29 g of toluene, 1.6 g of p-toluenesulfonic acid, and 0.07 g of hydroquinone were charged in a 100-mL three-neck flask equipped with a condenser and a thermometer. After the inner temperature was increased to 100°C, 12 g (0.14 mol) of methacrylic acid was added in the flask, followed by stirring at an inner temperature of 118°C for 3 hours. After the completion of the reaction, 82 g of the reaction solution was collected after being cooled. Toluene was removed with an evaporator, and 64 g of the residue was washed with tap water to obtain 60.8 g (yield: 86%) of a reaction product (89GC%), being a transparent, colorless liquid at room temperature, was obtained as the lower layer.

The reaction product was subjected to reduced pressure distillation under conditions of an inner pressure of 0.2 kPa, an inner temperature of 125 to 155°C, and a column top temperature of 84 to 86°C to obtain 42.2 g (distillation yield: 77.2%) of a purified reaction product (99.4GC%).

The resulting purified reaction product was confirmed by the results of ¹H-NMR and ¹⁹F-NMR to be the compound represented by the following formula:

CF₃(CF₂)₃(CH₂CF₂)(CF₂CF₂)(CH₂CH₂)OCOCH=CH₂

### [Fluorine-containing monomer C]

### Synthesis Example 4

(1) In a 1200-mL autoclave equipped with a stirrer and a thermometer, 603 g (1.17 mol) of

   CF₃(CF₂)(CH₂CF₂)(CF₂CF₂)₂I (97GC%)

   and 7 g of di-tertiary butyl peroxide were charged, and the autoclave was deaerated with a vacuum pump. When the inner temperature was increased to 80°C, ethylene was sequentially introduced into the autoclave to adjust the inner pressure to 0.5 MPa. When the inner pressure was decreased to 0.2 MPa, ethylene was introduced again to increase the inner pressure to 0.5 MPa. This process was repeated to introduce 49 g (1.7 mol) of ethylene over about 3 hours, while maintaining the inner temperature at 80 to 115°C. The content was collected at an inner temperature of 50°C or lower to obtain 630 g (yield: 98.8%) of

   CF₃(CF₂)(CH₂CF₂)(CF₂CF₂)₂(CH₂CH₂)I (98GC%).
(2) In a 200-mL three-neck flask equipped with a condenser and a thermometer, 100 g (0.18 mol) of

   CF₃(CF₂)(CH₂CF₂)(CF₂CF₂)₂(CH₂CH₂)I (98GC%)

   prepared in the above (1) and 100 g (1.68 mol) of N-methyl formamide were charged, followed by stirring at 150°C for 4 hours. After the completion of the reaction, the reaction mixture was washed with 30 mL of water. The lower layer (82.8 g) was mixed with 83 g of a 15 wt% p-toluenesulfonic acid aqueous solution, followed by stirring at 80°C for 8 hours. The reaction mixture was left standing, and then 60 g (yield: 62%) of a reaction product (78GC%), being a transparent, colorless liquid at room temperature, was obtained as the lower layer.
   The reaction product was subjected to reduced pressure distillation under conditions of an inner pressure of 0.2 kPa, an inner temperature of 100 to 144°C, and a column top temperature of 58 to 59°C to obtain 43 g (distillation yield: 88%) of a purified reaction product (95GC%).
   The resulting purified reaction product was confirmed by the results of ¹H-NMR and ¹⁹F-NMR to be the compound represented by the following formula:

   CF₃(CF₂)(CH₂CF₂)(CF₂CF₂)2(CH₂CH₂)OH
(3) 40.0g (0.09 mol) of the reaction product (95GC%) prepared in the above (2), 21 g of toluene, 1.7 g of p-toluenesulfonic acid, and 0.05 g of hydroquinone were charged in a 100-mL three-neck flask equipped with a condenser and a thermometer. After the inner temperature was increased to 100°C, 10.2 g (0.14 mol) of acrylic acid was added in the flask, followed by stirring at an inner temperature of 115°C for 2 hours. After the completion of the reaction, 72 g of the reaction solution was collected after being cooled. Toluene was removed with an evaporator, and 44.5 g of the residue was washed with tap water to obtain 41 g (yield: 82%) of a reaction product (86GC%), being a transparent, colorless liquid at room temperature, was obtained as the lower layer.

The reaction product was subjected to reduced pressure distillation under conditions of an inner pressure of 0.2 kPa, an inner temperature of 103 to 143°C, and a column top temperature of 60 to 61°C to obtain 16 g (distillation yield: 44%) of a purified reaction product (99GC%).

The resulting purified reaction product was confirmed by the results of ¹H-NMR and ¹⁹F-NMR to be the compound represented by the following formula:

CF₃(CF₂)(CH₂CF₂)(CF₂CF₂)₂(CH₂CH₂)OCOCH=CH₂

### [Fluorine-containing monomer D]

### Example 1

(1) C₄F₉(CH₂CH₂)(CF₂CF₂)(CH₂CH₂)OCOCH=CH₂ 41.0 g (45.6 wt.%)

### [Fluorine-containing monomer A]

| | |
|---|---|
| PEG (n: 3.5) PPG (n: 2.5) monomethacrylate | 41.0 g (45.6 wt.%) |
| (Blemmer 50PEP-300, produced by NOF Corporation) | |
| 2-hydroxyethyl acrylate | 4.0 g (4.4 wt.%) |
| N-n-butoxymethylacrylamide | 4.0 g (4.4 wt.%) |
| Chain transfer agent (n-dodecyl mercaptan) | 0.5 g |
| Solvent ethanol | 194.5 g |
| Azobis(isobutyronitrile) [AIBN] | 3.0 g |
| Ethanol for preparing an AIBN solution | 12.0 g |
| (Total charge amount: 300.0 g) | |

The above components, other than the AIBN ethanol solution, were placed in a 500-ml glass reactor and mixed, and the air in the reactor was replaced with nitrogen gas for 30 minutes. Then, the temperature in the reactor was gradually raised. When the temperature reached 40°C, 15 g of AIBN ethanol solution (polymerization initiator solution) was supplied. The internal temperature of the reactor was further gradually raised to 65°C, and the mixture was reacted at that temperature for 24 hours. The polymerization reaction was carried out by stirring at a rotation frequency of 400 rpm.

After completion of the reaction, the reaction mixture was cooled, thereby obtaining 283.0 g (recovery rate: 94.3%) of an ethanol dispersion having a solid matters content of 28.60 wt.%. The dispersion was further diluted with ethanol to form an ethanol dispersion having a solid matters content of 20 wt.%. The viscosity (25°C) of the ethanol dispersion measured was 21.8 mPa·s.

The obtained ethanol dispersion was placed in a vacuum oven at 120°C, and the solvent was removed to isolate a fluorine-containing polymer, which had a weight average molecular weight Mw of 35,000 and an Mw/Mn value of 2.5. Here, the weight average molecular weight Mw and the number average molecular weight Mn were measured by GPC using Shodex GPC KD 806+KD-802 at a temperature of 40°C, and using 10-mM THF as an eluate at a flow rate of 1 ml/min. A differential refractometer was used as the detector, and an SIC Labchart 180 (polystyrene conversion) was used for analysis.

(2) The ethanol dispersion before dilution (11.2 g) and 2.0 g of a blocked isocyanate crosslinking agent (CL-40, produced by Unimatec Co., Ltd.; active ingredient concentration: 60 wt.%) were added and mixed with 186.8 g of water (total amount: 200.0 g), thereby obtaining a treatment solution.
   A polyester-cotton (65:35) blended fabric was immersed in the treatment solution, and squeezed by a mangle (two-roll wringer), thereby attaching the treatment solution to the fabric in an amount of 100 wt.% based on the weight of the fabric. Then, the fabric was heated at 160°C for 120 seconds, followed by drying and curing.
(3) The obtained cured blended fabric was measured for the following items. Stain-proof and stain removal performance test (AATCC evaluation value):

### <Initial performance evaluation (shown as "Initial")>

A drop of dirty motor oil after 4,000-km running was added to the treated fabric, and a load of 7 gf/cm² (686 Pa) was applied for 1 minute. The fabric was then allowed to stand at room temperature for 1 hour. Thereafter, the fabric was washed by a washing method 1 [using 30 L of an aqueous solution of a detergent (Attack, produced by Kao Corporation; concentration: 0.67 g/L) at 40°C (bath ratio = 1:30; the amount of detergent aqueous solution per kg of fabric was 30 L), the fabric was washed in a washing machine for 15 minutes and then dehydrated for 3 minutes, followed by rinsing for 15 minutes, dehydration for 10 minutes, and air-drying or drying in an oven at 80°C for 5 minutes]. The dried test fabric was evaluated by the following criteria (according to AATCC-TM130-1966).

Evaluation criteria:
1: Significant stain remains
2: Considerable stain remains
3: Slight stain remains
4: Stain is not remarkable
5: No stain remains

### <Washing durability evaluation (shown as "Washing")>

The treated fabric that had been stained with dirty motor oil in the same manner as in the initial performance evaluation was washed by a washing method 2 [in the washing method 1, the amount of detergent aqueous solution was changed to 20 L (bath ratio = 1:30), the washing time was changed to 50 minutes, the time of the final dehydration was changed to 5 minutes, and the drying time in the oven was changed to 10 minutes]. Then, the washing durability was evaluated in the same manner as the initial performance.

### Stain removal evaluation (white coefficient):

The reflectance of the test fabric after washing and drying used in the initial performance evaluation (Initial) and the washing durability evaluation (Washing) was measured by a spectrocolorimeter (CM-1000, produced by Konica Minolta Sensing, Inc.), and the white coefficient (W.I%) was calculated. The degree of stain removal was evaluated from the size of the white coefficient (the evaluation was such that the lower the white coefficient was, the higher the degree of stain was).

### Water- and oil- repellency evaluation:

The water repellency (according to JIS L1092) and oil repellency (according to AATCC-TM118-1992) of the test fabric after washing and drying used in the initial performance evaluation (Initial) and the washing durability evaluation (Washing) were measured. The evaluation criteria of the water repellency were determined in accordance with the standard of the above-mentioned JIS.

| Water repellency | Status |
|---|---|
| 100 | No moisture or waterdrops on the surface |
| 90 | A few waterdrops on the surface |
| 80 | Individual partial moisture on the surface |
| 70 | Moisture on the half of the surface |
| 50 | Moisture on the entire surface |
| 0 | Complete moisture on both back and front surfaces |

The evaluation criteria of the oil repellency were determined in accordance with the standard of the above-mentioned AATCC-TM118. A drop of a test solution was added to the fabric, to which oil-repellent finish had been applied, and the status of the drop after 30 seconds was observed. When the drop of the test solution remained on the fabric, another test was performed using a test solution of a larger number. Using a test solution that marginally remained on the fabric, the oil repellency was evaluated by criteria shown in the following table (the value when 100% Nujol was not maintained was 0).

| Oil repellency No. | Test solution | Surface tension (mN/m, 25°C) |
|---|---|---|
| 8 | N-heptane | 20.0 |
| 7 | N-octane | 21.8 |
| 6 | N-decane | 23.5 |
| 5 | N-dodecane | 25.0 |
| 4 | N-tetradecane | 26.7 |
| 3 | N-hexadecane | 27.3 |
| 2 | Nujol-n-hexadecane (volume ratio = 65%:35%) | 29.6 |
| 1 | Nujol | 31.2 |

### Examples 2 to 5

In Example 1,
(1) The amounts of the components and the polymerization conditions were changed in various ways. However, in Example 2, a polymerization initiator solution comprising 1.0 g of azobis(2,4-dimethylvaleronitrile) and 16.0 g of polypropylene glycol monomethyl ether was used, the polymerization time was changed to 6 hours, and the polymerization temperature was changed to 70°C.
(2) The preparation of a treatment solution and the treatment with the treatment solution were performed in the same manner.
(3) The obtained cured blended fabrics were subjected to the same measurement.

Table 1 below shows the amounts of the components, the polymerization conditions, and the measurement results in the Examples.

**Table 1**

| | Ex. 1 | | Ex. 2 | | Ex. 3 | | Ex. 4 | | Ex. 5 | |
|---|---|---|---|---|---|---|---|---|---|---|
| [Initially charged monomer] | g | % | g | % | g | % | g | % | g | % |
| Fluorine-containing monomer A | 41.0 | 45.6 | | | | | | | 21.0 | 23.3 |
| Fluorine-containing monomer B | | | 37.0 | 45.7 | | | | | | |
| Fluorine-containing monomer C | | | | | 54.0 | 60.0 | | | | |
| Fluorine-containing monomer D | | | | | | | 41.0 | 45.1 | | |
| FAMAC-6 | | | | | | | | | 20.0 | 22.2 |
| PPOEOMA | 41.0 | 45.6 | | | 28.0 | 31.1 | 38.0 | 41.8 | 41.0 | 45.6 |
| PEOMA | | | 40.0 | 49.4 | | | | | | |
| 2HEA | 4.0 | 4.4 | 4.0 | 4.9 | 4.0 | 4.4 | 4.0 | 4.4 | 4.0 | 4.4 |
| B-MAM | 4.0 | 4.4 | | | 4.0 | 4.4 | 4.0 | 4.4 | 4.0 | 4.4 |
| EHMA | | | | | | | 4.0 | 4.4 | | |

| [Chain transfer agent] | | | | | | | | | | |
|---|---|---|---|---|---|---|---|---|---|---|
| n-DMC (g) | 0.5 | | 1.2 | | 0.5 | | 0.3 | | 0.5 | |

| [Solvent] | | | | | | | | | | |
|---|---|---|---|---|---|---|---|---|---|---|
| Ethanol (g) | 194.5 | | | | 194.1 | | 193.7 | | 194.5 | |
| DPGM (g) | | | 200.8 | | | | | | | |

| [Polymerization conditions] | | | | | | | | | | |
|---|---|---|---|---|---|---|---|---|---|---|
| Polymerization time (hr) | 24 | | 6 | | 24 | | 24 | | 24 | |
| Polymerization temperature (°C) | 65 | | 70 | | 65 | | 65 | | 65 | |
| [Produced dispersion] | | | | | | | | | | |
| Solid matters content (%) | 28.60 | | 27.30 | | 30.81 | | 29.58 | | 29.36 | |
| Recovery amount (kg) | 283.0 | | 285.7 | | 266.0 | | 275.8 | | 287.6 | |
| Recovery rate (%) | 94.3 | | 95.2 | | 88.7 | | 91.9 | | 95.9 | |
| Viscosity (mPa·s) | 21.8 | | 2350.0 | | 21.8 | | 43.0 | | 19.5 | |
| [Copolymer] | | | | | | | | | | |
| Mw (×10³) | 35 | | 350 | | 33 | | 68 | | 28 | |
| Mw/Mn | 2.5 | | 3.2 | | 2.4 | | 3.0 | | 2.7 | |

| Performance test | | | | | | | | | | |
|---|---|---|---|---|---|---|---|---|---|---|
| [Treatment solution] | | | | | | | | | | |
| Polymerization solution (g) | 11.2 | | 11.7 | | 10.4 | | 10.8 | | 10.9 | |
| Crosslinking agent (g) | 2.0 | | 2.0 | | 2.0 | | 2.0 | | 2.0 | |
| Water (g) | 186.8 | | 186.3 | | 187.6 | | 187.2 | | 187.1 | |

| [Measurement results] | | | | | | | | | | |
|---|---|---|---|---|---|---|---|---|---|---|
| | Initial | Washing | Initial | Washing | Initial | Washing | Initial | Washing | Initial | Washing |
| AATCC evaluation value | 5.0 | 4.5 | 5.0 | 4.5 | 5.0 | 4.5 | 5.0 | 4.5 | 4.5 | 4.0 |
| White coefficient (W.I%) | 94 | 93 | 94 | 92 | 92 | 90 | 93 | 91 | 90 | 88 |
| Water repellency | 70 | 70 | 70 | 70 | 70 | 70 | 70 | 70 | 70 | 50 |
| Oil repellency | 7 | 6 | 7 | 6 | 6 | 5 | 6 | 5 | 6 | 6 |

| | | | | | | | | | | |
|---|---|---|---|---|---|---|---|---|---|---|
| Note 1) The AATCC evaluation value of a new product (purchased fabric) is 5.0, and the W.I value is 95%. The AATCC evaluation value, which shows the initial evaluation value, of an untreated product (which has been subjected to various tests without water- and oil-repellent treatment) is 1, the W.I value is 62%, and both of the water repellency and oil repellency are 0. Note 2) The AATCC evaluation value of 4.5 shows the intermediate value between 4 and 5. Note 3) Explanation of the abbreviations in Tables 1 and 2 Fluorine-containing monomer A: C₄F₉(CH₂CF₂)(CF₂CF₂)(CH₂CH₂)OCOCH=CH₂ Fluorine-containing monomer B: C₄F₉(CH₂CF₂)(CF₂CF₂)₂(CH₂CH₂)OCOCH=CH₂ Fluorine-containing monomer C: C₄F₉(CH₂CF₂)(CF₂CF₂)₂(CH₂CH₂)OCOC(CH₃)=CH₂ Fluorine-containing monomer D: C₂F₅(CH₂CF₂)(CF₂CF₂)₂(CH₂CH₂)OCOCH=CH₂ FAAC-8: 2-(n-perfluorooctyl)ethyl acrylate FAMAC-6: 2-(n-perfluorohexyl)ethyl methacrylate FAAC-6: 2-(n-perfluorohexyl)ethyl acrylate PPOEOMA: Blemmer 50PEP-300, produced by NOF Corporation Polyethylene glycol (n: 3.5) polypropylene glycol (n: 2.5) monomethacrylate PEOMA: Blemmer PME-200, produced by NOF Corporation Methoxy polyethylene glycol (n:4) monomethacrylate 2HEA: 2-hydroxyethyl acrylate B-MAM: N-n-butoxymethylacrylamide EHMA: 2-ethylhexyl methacrylate n-DMC: n-dodecyl mercaptan | | | | | | | | | | |

### Comparative Examples 1 to 3

### In Example 1,

(1) The same amount (41.0 g) of FAAC-8, FAMAC-6, or FAAC-6 was used, respectively, in place of the fluorine-containing monomers A to C. Moreover, in Comparative Example 1, the amount of chain transfer agent was changed to 0.4 g, and the amount of polymerization initiator was changed to 3.1 g.
(2) The preparation of a treatment solution and the treatment with the treatment solution were performed in the same manner.
(3) The obtained cured blended fabrics were treated in the same manner.

### Comparative Example 4

(1) In Comparative Example 2, neither 2HEA nor B-MAM was used, and each amount of FAMAC-6 and PPOEOMA was changed to 45.0 g (50.0 wt.%).
(2) The preparation of a treatment solution and the treatment with the treatment solution were performed in the same manner as in Comparative Example 2.
(3) The obtained cured blended fabric was treated in the same manner as in Comparative Example 2.

### Comparative Example 5

### In Example 1,

PEG-PPG monomethacrylate was not used, the amount of fluorine-containing monomer was changed to 82.0 g (91.1%), the amount of chain transfer agent was changed to 0.4 g, and the amount of azobis(isobutyronitrile) was changed to 3.1 g.

The obtained copolymer was coagulated and precipitated, and a stable ethanol dispersion was not obtained. Accordingly, the properties of the produced dispersion and copolymer, the treatment solution, and the measurement results are not shown.

### Comparative Example 6

In Example 2,
the same amount (40.0 g; 49.4%) of stearyl acrylate was used in place of methoxy polyethylene glycol monomethacrylate.

The obtained copolymer was coagulated and precipitated, and a stable ethanol dispersion was not obtained. Accordingly, the properties of the produced dispersion and copolymer, the treatment solution, and the measurement results are not shown.

Table 2 below shows the amounts of the components, the polymerization conditions, and the measurement results in Comparative Examples 1 to 4.

**Table 2**

| | Comp. Ex. 1 | | Comp. Ex. 2 | | Comp. Ex. 3 | | Comp. Ex. 4 | |
|---|---|---|---|---|---|---|---|---|
| [Initially charged monomer] | | | | | | | | |
| | g | % | g | % | g | % | g | % |
| FAAC-8 | 41.0 | 45.6 | | | | | | |
| FAMAC-6 | | | 41.0 | 45.6 | | | 45.0 | 50.0 |
| FAAC-6 | | | | | 41.0 | 45.6 | | |
| PPOEOMA | 41.0 | 45.6 | 41.0 | 45.6 | 41.0 | 45.6 | 45.0 | 50.0 |
| 2HEA | 4.0 | 4.4 | 4.0 | 4.4 | 4.0 | 4.4 | | |
| B-MAM | 4.0 | 4.4 | 4.0 | 4.4 | 4.0 | 4.4 | | |

| [Chain transfer agent] | | | | | | | | |
|---|---|---|---|---|---|---|---|---|
| n-DMC (g) | 0.4 | | 0.5 | | 0.5 | | 0.5 | |

| [Produced dispersion] | | | | | | | | |
|---|---|---|---|---|---|---|---|---|
| Solid matters content (%) | 27.04 | | 28.50 | | 27.72 | | 26.50 | |
| Recovery amount (kg) | 286.8 | | 267.9 | | 278.9 | | 285.0 | |
| Recovery rate (%) | 95.6 | | 89.3 | | 93.0 | | 95.0 | |
| Viscosity (mPa·s) | 23.2 | | 22.8 | | 18.4 | | 25.0 | |

| [Copolymer] | | | | | | | | |
|---|---|---|---|---|---|---|---|---|
| Mw (×10³) | 45 | | 42 | | 23 | | 56 | |
| Mw/Mn | 2.5 | | 2.6 | | 2.8 | | 2.8 | |
| Performance test | | | | | | | | |

| [Treatment solution] | | | | | | | | |
|---|---|---|---|---|---|---|---|---|
| Polymerization solution (g) | 11.8 | | 11.2 | | 11.5 | | 12.1 | |
| Crosslinking agent (g) | 2.0 | | 2.0 | | 2.0 | | 2.0 | |
| Water (g) | 186.2 | | 186.8 | | 186.5 | | 185.9 | |

| [Measurement results] | | | | | | | | |
|---|---|---|---|---|---|---|---|---|
| | Initial | Washing | Initial | Washing | Initial | Washing | Initial | Washing |
| AATCC evaluation value | 5.0 | 4.5 | 3.5 | 2.5 | 2.5 | 2.0 | 2.5 | 1.5 |
| White coefficient (W.I%) | 95 | 93 | 88 | 82 | 81 | 78 | 78 | 65 |
| Water repellency | 70 | 50 | 50 | 50 | 50 | 50 | 50 | 50 |
| Oil repellency | 7 | 6 | 6 | 5 | 5 | 5 | 4 | 2 |

## Claims

1. A fluorine-containing copolymer that is a copolymer of a polyfluoroalkyl alcohol (meth)acrylic acid derivative represented by the general formula:
CₙF₂ₙ₊₁(CH₂CF₂)ₐ(CF₂CF₂)_{b}(CH₂CH₂)_{c}OCOCR=CH₂ [I]
wherein R is a hydrogen atom or a methyl group, n is an integer of 1 to 6, a is an integer of 1 to 4, b is an integer of 1 to 3, and c is an integer of 1 to 3; and a (meth)acrylic acid polyoxyalkylene ester represented by the general formula:
R¹(OR²)ₚ(OR³)_{q}OCOCR=CH₂ [II]
wherein R is a hydrogen atom or a methyl group, R¹ is a hydrogen atom, a linear or branched alkyl group having 1 to 30 carbon atoms, or an aromatic group, R² and R³ are different each other and each is a linear or branched alkylene group having 1 to 6 carbon atoms, p is an integer of 1 to 100, and q is an integer of 0 or 1 to 50, provided that when p is 1 and q is 0, R¹ is an aforementioned alkyl group or an aromatic group;
wherein the polyfluoroalkyl alcohol (meth)acrylic acid derivative of formula [I] and the (meth)acrylic acid polyoxyalkylene ester of formula [II] are copolymerized at a weight ratio of [I] : [II] which is 20 to 70 : 80 to 30 (provided that the total of both is 100).

2. The fluorine-containing copolymer according to claim 1, which has a weight average molecular weight Mw of 1,000 to 1,000,000.

3. The fluorine-containing copolymer according to claim 1, wherein a (meth)acrylic acid polyoxyalkylene ester, wherein R² is an ethylene group, and R³ is a propylene group or a butylene group, is copolymerized.

4. The fluorine-containing copolymer according to claim 1, wherein a crosslinkable group-containing monomer is further copolymerized.

5. The fluorine-containing copolymer according to claim 4, wherein the crosslinkable group-containing monomer is a hydroxyl group-, amide group-, or epoxy group-containing monomer.

6. A water- and oil-repellent comprising the fluorine-containing copolymer according to claim 1 or 4 as an active ingredient.

7. The water- and oil-repellent according to claim 6, wherein blocked isocyanate is added as a crosslinking agent.

8. The water- and oil-repellent according to claim 6, which is applied to a cotton fabric or a cotton blended fabric.

9. The water- and oil-repellent according to claim 7, which is applied to a cotton fabric or a cotton blended fabric.

## Patentansprüche

1. Fluorhaltiges Copolymer, welches ein Copolymer ist aus einem Polyfluoralkylalkohol(meth)acrylsäurederivat, dargestellt durch die allgemeine Formel
CₙF₂ₙ₊₁(CH₂CF₂)ₐ(CF₂CF₂)_{b}(CH₂CH₂) _{c}OCOCR=CH₂ [I]
worin R ein Wasserstoffatom oder eine Methylgruppe ist, n eine ganze Zahl von 1 bis 6 ist, a eine ganze Zahl von 1 bis 4 ist, b eine ganze Zahl von 1 bis 3 ist und c eine ganze Zahl von 1 bis 3 ist; und einem (Meth)acrylsäurepolyoxy-alkylenester, dargestellt durch die allgemeine Formel
R¹(OR²)ₚ(OR³)_{q}OCOCR=CH₂ [II]
worin R ein Wasserstoffatom oder eine Methylgruppe ist, R¹ ein Wasserstoffatom, eine lineare oder verzweigte Alkylgruppe mit 1 bis 30 Kohlenstoffatomen, oder eine aromatische Gruppe ist, R² und R³ jeweils voneinander verschieden sind, und jedes eine lineare oder verzweigte Alkylengruppe mit 1 bis 6 Kohlenstoffatomen ist, p eine ganze Zahl von 1 bis 100 ist, und q eine ganze Zahl von 0 oder 1 bis 50 ist, mit der Maßgabe, dass, sofern p 1 ist und q 0 ist, R¹ eine vorgenannte Alkylgruppe oder eine aromatische Gruppe darstellt;
wobei das Polyfluoralkylalkohol(meth)acrylsäurederivat der Formel [I] und der (Meth)acrylsäurepolyoxyalkylenester der Formel [II] in einem Gewichtsverhältnis von [I] : [II] von 20 bis 70 : 80 bis 30 copolymerisiert sind (mit der Maßgabe, dass die Gesamtheit aus beiden 100 ist).

2. Fluorhaltiges Copolymer gemäß Anspruch 1, welches ein gewichtsmittleres Molekulargewicht Mw von 1.000 bis 1.000.000 aufweist.

3. Fluorhaltiges Copolymer gemäß Anspruch 1, wobei ein (Meth)acrylsäurepolyoxyalkylenester, worin R² eine Ethylengruppe ist, und R³ eine Propylengruppe oder Butylengruppe ist, copolymerisiert ist.

4. Fluorhaltiges Copolymer gemäß Anspruch 1, wobei ein/eine vernetzbare Gruppe-enthaltendes Monomer des Weiteren copolymerisiert ist.

5. Fluorhaltiges Copolymer gemäß Anspruch 4, wobei das eine vernetzbare Gruppe-enthaltende Monomer ein Hydroxylgruppe-, Amidgruppe-, oder Epoxygruppe-enthaltendes Monomer ist.

6. Wasser- und ölabweisendes Mittel, umfassend das fluorhaltige Copolymer gemäß Anspruch 1 oder 4 als aktiven Inhaltsstoff.

7. Wasser- und ölabweisendes Mittel gemäß Anspruch 6, wobei blockiertes Isocyanat als Vernetzungsmittel zugegeben ist.

8. Wasser- und ölabweisendes Mittel gemäß Anspruch 6, welches auf Baumwollstoff oder Baumwollmischstoff aufgetragen wird.

9. Wasser- und ölabweisendes Mittel gemäß Anspruch 7, welches auf Baumwollstoff oder Baumwollmischstoff aufgetragen wird.

## Revendications

1. Copolymère fluoré qui est un copolymère d'un dérivé d'acide (méth)acrylique de polyfluoroalkyl alcool représenté par la formule générale :
CₙF₂ₙ₊₁(CH₂CF₂)ₐ(CF₂CF₂)_{b}(CH₂CH₂)_{c}OCOCR=CH₂ [I]
dans laquelle R est un atome d'hydrogène ou un groupe méthyle, n est un nombre entier allant de 1 à 6, a est un nombre entier allant de 1 à 4, b est un nombre entier allant de 1 à 3, et c est un nombre entier allant de 1 à 3 ; et un ester de polyoxyalkylène d'acide (méth)acrylique représenté par la formule générale :
R¹(OR²)ₚ(OR³)_{q}OCOCR=CH₂ [II]
dans laquelle R est un atome d'hydrogène ou un groupe méthyle, R¹ est un atome d'hydrogène, un groupe alkyle linéaire ou ramifié contenant 1 à 30 atomes de carbone, ou un groupe aromatique, R² et R³ sont différents l'un de l'autre et chacun est un groupe alkylène linéaire ou ramifié contenant 1 à 6 atomes de carbone, p est un nombre entier allant de 1 à 100, et q est un nombre entier égal à 0 ou allant de 1 à 50, à condition que quand p est 1 et q est 0, R¹ soit un groupe alkyle ou un groupe aromatique susmentionnés ;
dans lequel le dérivé d'acide (méth)acrylique de polyfluoroalkyl alcool de formule [I] et l'ester de polyoxyalkylène d'acide (méth)acrylique de formule [II] sont copolymérisés à un rapport pondéral [I]/[II] qui est de 20 à 70/80 à 30 (à condition que le total des deux soit égal à 100).

2. Copolymère fluoré selon la revendication 1, qui présente un poids moléculaire moyen en poids Mw de 1000 à 1 000 000.

3. Copolymère fluoré selon la revendication 1, dans lequel un ester de polyoxyalkylène d'acide (méth)acrylique, dans lequel R² est un groupe éthylène, et R³ est un groupe propylène ou un groupe butylène, est copolymérisé.

4. Copolymère fluoré selon la revendication 1, dans lequel un monomère contenant un groupe réticulable est en outre copolymérisé.

5. Copolymère fluoré selon la revendication 4, dans lequel le monomère contenant un groupe réticulable est un monomère contenant un groupe hydroxyle, un groupe amide ou un groupe époxy.

6. Hydrofuge ou oléofuge comprenant le copolymère fluoré selon la revendication 1 ou 4 en tant que principe actif.

7. Hydrofuge ou oléofuge selon la revendication 6, dans lequel un isocyanate bloqué est ajouté en tant qu'agent de réticulation.

8. Hydrofuge ou oléofuge selon la revendication 6, qui est appliqué sur un tissu de coton ou un tissu mélangé avec du coton.

9. Hydrofuge ou oléofuge selon la revendication 7, qui est appliqué sur un tissu de coton ou un tissu mélangé avec du coton.
